# EUROPEAN PATENT APPLICATION

(11) **EP 1 388 985 A1**
(43) Date of publication of application: **11.02.2004**
(21) Application number: 02017546.9
(22) Date of filing: 06.08.2002
(51) Int. Cl.: H04L 12/58, H04L 12/28

(54) **Method and system for handling e-mail tasks within a HAVi system based home network**

(71) Applicant: Sony International (Europe) GmbH, 10785 Berlin (DE)
(72) Inventor: Clanget, Ulrich, Adv., Tech., Cr. Stuttgart, 70327 Stuttgart (DE); Mayer, Matthias, Advanced Tech., Center Stuttgart, 70327 Stuttgart (DE)
(74) Representative: Müller - Hoffmann & Partner

(57) **Abstract**

A method for handling e-mail tasks within a HAVi system based home network (1) having a plurality of home network devices (2 to 4) is characterized by concentrating functionality needed by said home network devices (3, 4) and/or applications running said home network devices (3, 4) to send and/or receive and/or manage e-mails within an e-mail functional component module (7). Thus, a lean, centralised and transparent handling mechanism of e-mail tasks is provided.

## Description

The invention relates to a method and system for handling e-mail tasks within a HAVi system based home network.

In recent years, a lot of research work has been done to provide home network architectures and methods for interconnecting and controlling home network devices. Primary goals to be achieved by home network architectures are that any home network device can identify, control and "present" any other home network device, and that any home network device can communicate with any other home network device.

To run a home network, a communication standard (home network middleware) defining the way how to communicate between the home network devices/home network applications is needed. A very promising communication standard is the HAVi communication standard. This communication standard offers functionality in form of corresponding application protocol interfaces (API) being accessible by all home network devices/applications running on said home network devices.

In order to handle e-mail tasks, the home network devices/applications may use said offered TCP/IP functionality. However, from an application development point of view, this is not very useful since a lot of functionality needed to perform e-mail tasks is left to be implemented in said home network devices/applications.

It is an object of the present invention to provide a method and a system for handling e-mail tasks within a HAVi system based home network which enable home network devices/applications to use e-mail functionality in an easy, transparent manner, and which enable an easy implementation of e-mail functionality into home network devices/applications.

To solve this object, the invention provides a method for handling e-mail tasks according to claim 1. Further, the invention provides a system for handling e-mail tasks according to claim 7. Further, the invention provides a computer program product according to claim 8. Last, a computer readable storage means according to claim 9 is provided.

According to the invention, a method for handling e-mail tasks within a HAVi system based home network having a plurality of home network devices is characterized by concentrating functionality needed by the home network devices and/or applications running on the home network devices to send and/or receive and/or manage e-mails within an e-mail functional component module.

As can be taken from the HAVi specification, each home network device is to be understood as a physical entity attached to the home network, for example a video player, a recorder, a camera, a CD player, and the like. A functional component is to be understood as an abstraction within the HAVi architecture that represents a group of related functions associated with a device. For example, a receiver may consist of the following functional components: tuner, decoder, and audio amplifier. A functional component module is to be understood as a HAVi software element providing an interface controlling a specific functional component of a device.

The inventive e-mail functional component module provides an interface between hardware/software needed to perform e-mail tasks (for example modem- and ISDN-hardware) and home network devices/applications which perform their e-mail tasks on the basis of said hardware/software.

Since the HAVi architecture bases on the use of functional component modules, only little effort is necessary to introduce the e-mail functionality into the existing HAVi environment. This is realised by adding the new e-mail functional component module to the already existing functional component modules. The e-mail functional component module provides a transparent, centralised interface allowing home network devices/applications running on said home network devices to perform their e-mail tasks. The only thing which has to be done in order to enable an application to use said e-mail functionality is to implement the corresponding e-mail application program interface (e-mail API) into the application.

Preferably, the functionality contained within the e-mail functional component module is offered to the home network devices/applications via an e-mail application protocol interface and/or data structures which are communication protocol independent. In other words, the way of communication offered by said e-mail application program interface and said applications is performed not on a protocol level (like TCP/IP) but on an application level. Thus, the application developer does not have to care about tasks concerning specific communication protocols.

Preferably, the home network devices/applications use an e-mail sending function call specified by the application program interface of the e-mail functional component module in order to send e-mails.

Corresponding to this, the home network devices/applications use an e-mail register function call specified by the application program interface of the e-mail functional component module in order to register themselves as e-mail clients at the e-mail functional component module. In this sense, the e-mail functional component module acts like a server: incoming e-mails are processed by the e-mail functional component module in order to determine to which e-mail client they are addressed to. If the corresponding e-mail client has been registered itself as e-mail client at the e-mail functional component module before, all e-mails addressed to said e-mail client are transferred from the e-mail functional component module (server) to the e-mail client. In order to perform said transferring process of incoming e-mails to corresponding e-mail clients, the e-mail functional component module may use a receive function call also specified by said application program interface of the e-mail functional component module.

It is also possible to include e-mail account functionality into the e-mail functional component module. That is, the e-mail functional component module may store incoming e-mails as long as they are demanded by the e-mail clients.

Basically, two different ways of transferring e-mails from the e-mail functional component module to the e-mail clients are possible: In a first way, incoming e-mails are automatically transferred to the e-mail clients without any delay. In a second way, the e-mail clients only get corresponding notifications that e-mails had been received. The home network device/application then has to decide if the e-mail (which for example has been stored in the meantime by the e-mail functional component module for later retrieval) has to be fetched or not. This two mechanisms free the home network devices/applications from constantly polling for incoming e-mails, which eases the development of e-mail client functionality enormously.

The invention further provides a system for handling e-mail tasks within a HAVi system based home network which is capable of performing and/or realising the method according to the present invention for handling e-mail tasks as described above.

Further, the invention provides a computer program product comprising computer product means adapted to perform and/or realise the method according to the present invention for handling e-mail tasks as described above, when it is executed on a computer, a digital signal processing means, or the like.

Last, a computer readable storage means for storing above-described computer program product is provided.

In the following, further features and advantages of the present invention are described by way of example while making reference to the accompanying drawing, wherein

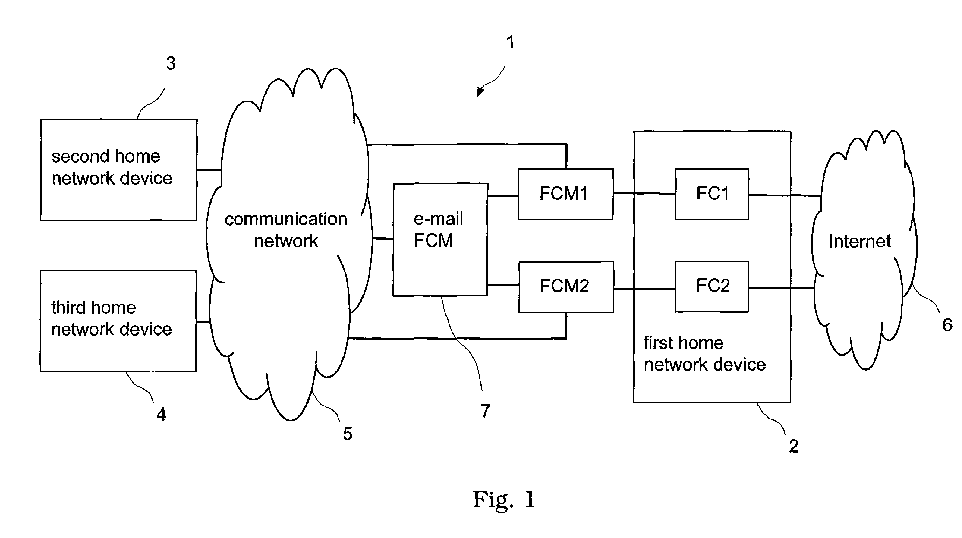

**Fig. 1** is a schematic drawing showing a preferred embodiment of a part of a HAVi network architecture comprising an e-mail functional component module which hosts functionality for handling e-mail tasks.

A part of a HAVi based home network 1 comprises a first home network device 2 (which is in this case a gateway), a second home network device 3 and a third home network device 4, wherein said home network devices 2 to 4 are connected with each other via a communication network 5. The communication network 5 is for example based upon an IEEE 1394 communication bus. The first home network device 2 comprises a first functional component FC1 and a second functional component FC2. The first functional component FC1 may for example be a modem, whereas the second functional component FC2 may be an ISDN card. The first home network device 2 is also connected to the internet 6 and serves as a communication interface between the second and third home network devices 3, 4 and the internet 6. To use the first functional component FC1 (modem) and the second functional component FC2 (ISDN card), a first functional component module FCM1 and a second functional component module FCM2 (preferably software elements) are assigned to the first and second functional components FC1, FC2, respectively. The functional component modules FCM1, FCM2 provide respective interfaces for the second and the third home network devices 3, 4 in order to use the functional components FC1, FC2. In order to facilitate the process of handling e-mail tasks, an e-mail functional component module 7 is included within the home network 1. The e-mail functional component module 7 can be regarded as an interface between the second and third home network devices 3, 4 and the first and second functional component modules FCM1, FCM2 which allows a very simple way of communication between the second and third home network devices 3, 4 and the functional component modules FCM1, FCM2 as far as e-mail tasks are concerned.

As has become apparent in the foregoing description, the present invention enables to design applications having only a small code size. This is achieved by an "easy to use" interface, which also reduces the possibility of errors while implementing e-mail-functionality. The process of sending e-mails can be performed in a very simple way (up to now it was necessary for example to implement the SMTP (simple mail transfer protocol) in the client application). Further, it is possible for home network devices/applications to receive e-mails which was not possible up to now (because of the lack of server functionality in already existing functional component modules like a web proxi functional component module).

Thus, the inventive concept of defining a new functional component module especially designed for handling e-mail tasks allows a lean, centralised and transparent handling of e-mail tasks within the home network.

In the following description, a preferred embodiment of an API (application program interface) definition is given as a preferred embodiment of an e-mail functional component module being used in a HAVi system based home network. Reference is made to:
[1] RFC 822
   Standard for the format of ARPA Internet Text Messages, and
[2] RFC 2045
   Multipurpose Internet Mail Extensions (MIME) Part One:
   Format of Internet Message Bodies.

### 1. EMail FCM Services

| **Service** | **Comm Type** | **Locality** | **Access** | **Resv Prot** |
|---|---|---|---|---|
| EMail::Send | M | global | all | |
| EMail::Register | M | global | all | |
| <Client>::Receive | M | global | EMail (all) | |

### 2. EMail FCM Data Structures

### Originator

### Definition:

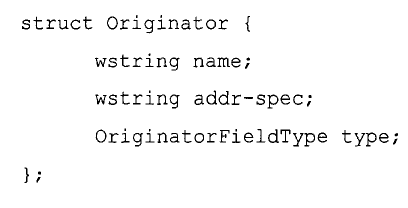

### Description:

This field contains the authenticated identity of the sender the message according to [1].
That is used for the email fields "From", "Sender" and "Reply-To".
name represents the "Human Name" of a person and addr-spec represents the global
email address of the format local-part "@" domain.

### OriginatorFieldType

### Definition:

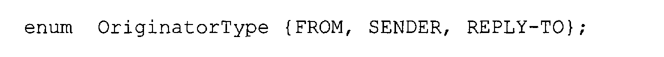

### Description:

This data type specifies the Originator type according to [1].
A FROM originator contains identity of the person who wishes the message to be sent.
A SENDER originator contains the authenticated identity of the agent (person, system or process) that sends the message.
A REPLY-TO originator contains the address of the person who wishes to receive the response of the message.

### Recipient

### Definition:

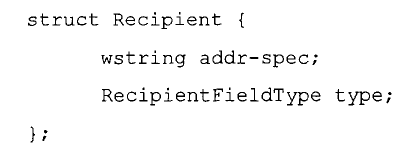

### Description:

This data type specifies the recipient according to [1].

This data type specifies the recipient of an email. The type field specifies the type of a recipient.

The addr-spec field specifies the email address where the email is sent.

### RecipientFieldType

### Definition:

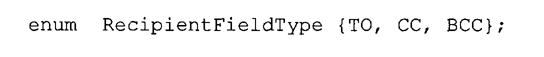

### Description:

This data type specifies the recipient type according to [1].

A TO recipient contains the identity of the primary recipients of the message.

A CC recipient contains the identity of the secondary (informational) recipients of the message.

A BCC recipient contains the identity of additional recipients of the message. The contents of this field are not included in copies of the message sent to the primary and secondary recipients: Some systems may choose to include the text of the "Bcc" field only in the author(s)'s copy, while others may also include it in the text sent to all those indicated in the "Bcc" list.

### Attachment

### Definition:

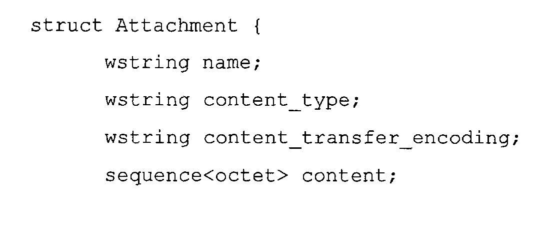

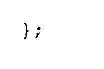

### Description:

This data type specifies content that is attached to an email, a so-called attachment according to [2].

A content_type and content_transfer_encoding specify the content type and the encoding of the attachment. The name specifies the filename of the attachment.

### 3. EMail FCM APls

This section describes the APIs of the Email FCM

### <Client>::Receive

### Prototype:

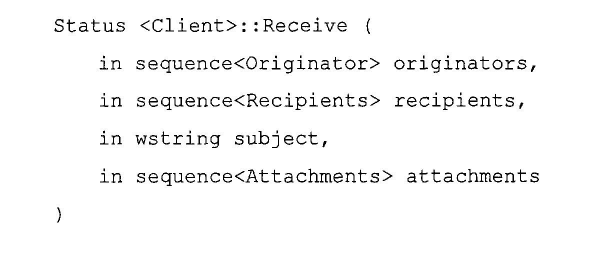

### Parameters:

originators - list of originators
recipients - list of recipients
subject - EMail subject
attachments - list of attachments

### Description:

This callback method is called by the Email FCM to inform a registered client about incoming emails.

### Email:: Register

### Prototype:

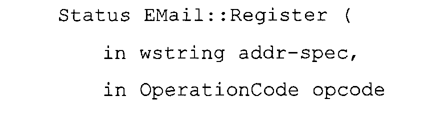

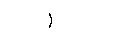

### Parameters:

addr-spec - specifies recipient of incoming emails
opcode - specifies the callback method of the client that registers for incoming emails.

### Description:

A client that wants to be notified about incoming emails has to register at the Email FCM with its global email address of the format local-part "@" domain and the operation code of its callback method. This method will be called when an email for the email address addr-spec arrives.

### EMail::Send

### Prototype:

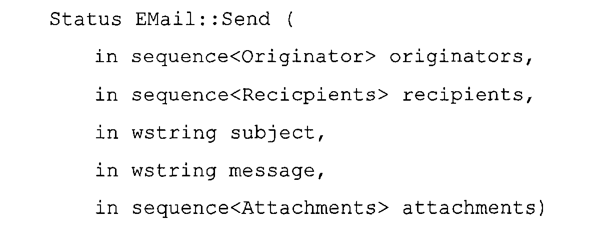

### Parameters:

originators - list of originators
recipients -list of recipients
subject - EMail subject
message -EMail message/body text
attachments - list of attachments

### Description:

A client uses this method to send an email.

## Claims

1. Method for handling e-mail tasks within a HAVi system based home network (1) having a plurality of home network devices (2 to 4), **characterized by** concentrating functionality needed by said home network devices (3, 4) and/or applications running on said home network devices (3, 4) to send and/or receive and/or manage e-mails within an e-mail functional component module (7).

2. Method according to claim 1, **characterized in that** said functionality of said e-mail functional component module 7 is offered to said home network devices/applications (3, 4) via an application protocol interface and/or data structures which are communication protocol independent.

3. Method according to claim 2, **characterized in that** said home network devices/applications (3, 4) use an e-mail sending function call specified by said application protocol interface of said e-mail functional component module (7) in order to send e-mails.

4. Method according to claim 2 or 3, **characterized in that** said home network devices/applications (3, 4) use an e-mail register function call specified by said application program interface of said e-mail functional component module (7) in order to register themselves as e-mail clients at said e-mail functional component module (7).

5. Method according to claim 4, **characterized by** transferring incoming e-mails to corresponding e-mail clients if they had been registered as e-mail clients before.

6. Method according to claim 5, **characterized in that** said transferring of incoming e-mails to corresponding e-mail clients (3, 4) is performed by said e-mail functional component module (7) which uses a receive function call specified by said application protocol interface of said e-mail functional component module (7).

7. System for handling e-mail tasks within a HAVi system based home network which is capable of performing and/or realising the method for handling e-mail tasks according to anyone of the claims 1 to 6 and/or the steps thereof.

8. Computer program product, comprising computer program means adapted to perform and/or realise the method for handing e-mail tasks within a HAVi system based home network according to anyone of the claims 1 to 6 and/or the steps thereof, when it is executed on a computer, a digital signal processing means, or the like.

9. Computer readable storage means for storing a computer program product according to claim 8.
